# EUROPÄISCHE PATENTSCHRIFT

(11) **EP 0 713 895 B1**
(45) Veröffentlichungstag und Bekanntmachung des Hinweises auf die Patenterteilung: **22.03.2000**
(21) Anmeldenummer: 95117838.3
(22) Anmeldetag: 13.11.1995
(51) Int. Cl.: C08G 69/36, D01F 6/80

(54) **Ternäres Copolyamid**
Ternary copolyamide
Copolyamide ternaire

(30) Priorität: 25.11.1994 DE 4441981
(43) Veröffentlichungstag der Anmeldung: 29.05.1996
(73) Patentinhaber: BAYER AG, 51368 Leverkusen (DE)
(72) Erfinder: Morhenn, Heinrich, Dr., D-50829 Köln (DE); Brokmeier, Dieter, Dr., D-41540 Dormagen (DE); Nielinger, Werner, D-47802 Krefeld (DE)

(56) Entgegenhaltungen:
- DE-A- 2 800 744
- FR-A- 1 576 946
- FR-A- 2 228 806
- GB-A- 1 329 697

## Beschreibung

Die Erfindung betrifft ein neues ternäres Polyamid für die Herstellung von Monofilen, Folien und Spritzgußkörpern.

Ternäre Copolyamide sind bekannt (z.B. DE-A 2 800 744).

Gegenstand der Erfindung sind ternäre Polyamide hergestellt aus
a) 75 - 85 Gew.-% Caprolactam
b) 4 - 20 Gew.-% Aminoundecansäure und/oder Aminododecansäure und
c) 4 - 20 Gew.-% Hexamethylendiaminadipat (AH-Salz)
so daß die Summe der Komponenten im Polymer nach Abzug des Reaktionswassers jeweils 100 % ergibt.

Die erfindungsgemäßen Terpolyamide werden analog bekannter Verfahren hergestellt. Die Herstellung kann kontinuierlich oder diskontinuierlich erfolgen. Alle Komponenten können z.B. auf einmal zusammengegeben werden. Die Komponenten werden statistisch in das Polymer eingebaut.

Die erfindungsgemäßen ternären Polyamide zeichnen sich gegenüber Copolyamiden (Polyamide aus Caprolactam und einer weiteren Componente) mit gleichem Caprolactamanteil, d.h. Copolyamiden aus 75-85 % Caprolactam und 15-25 % 11-Aminoundecansäure oder 12-Aminododecansäure bzw. Copolyamiden aus 75-85 % Caprolactam und 15-25 % AH-Salz, durch größere Weichheit, geringere Kristallisationsneigung, niedrigeren Schmelzpunkt sowie Kostenvorteile aus.

Die größere Weichheit und die geringere Kristallisationsneigung treten insbesondere gegenüber Copolyamiden aus 75-85 % Caprolactam und 15-25 % AH-Salz in Erscheinung. Gegenüber Copolyamiden aus 75-85 % Caprolactam und 15-25 % 11-Aminoundecansäure oder 12-Amidododecansäure ergeben sich zudem Kostenvorteile durch die leichtere Zugänglichkeit von AH-Salz gegenüber 11-Aminoundecansäure oder 12-Aminododecansäure.

Die in DE-A 2 800 744 beschriebenen ternären Polyamide haben eine mittlere Amidhäufigkeit von 1-CONH zu 6,4-7,4 CH₂. Die erfindungsgemäßen Terpolyamide haben mit einer mittleren Amidhäufigkeit von 4,6 bis 5,7 eine grundsätzlich andere Zusammensetzung.

Es zeigt sich, daß die erfindungsgemäßen Terpolyamide im Gegensatz zu den in der DE-A 2 800 744 beschriebenen eine hohe Beständigkeit gegen Wasser haben und auch eine geringe Klebeneigung aufweisen, so daß sie sich gut zu Monofilen verspinnen und strecken lassen. Sie können weiterhin zu Formkörpern, Folien, Fasern usw. verarbeitet werden.

### Beispiele

### Beispiel 1

Ein Terpolyamid in der Zusammensetzung 80 % Caprolactam, 5 % Aminododecansäure und 15 % AH-Salz wurde durch kontinuierliche Polymerisation hergestellt. Die Einbaurate und Verteilung der Monomeren lassen sich aus dem 13-C NMR ersehen.

Das Polymer hat eine relative Viskosität von 2,95 (gemessen in m-Kresol). Die Differentialthermoanalyse zeigt einen Schmelzpunkt von 191 °C (Peak 2. Aufheizen), die Kristallisationsenthalpie beträgt beim Abkühlen von 150 °C 39,8 J/g.

### Beispiel 2

Ein Terpolyamid in der Zusammensetzung 80 % Caprolactam, 15 % Aminoundecansäure und 5 % AH-Salz wurde durch kontinuierliche Polymerisation hergestellt. Die Einbaurate und Verteilung der Monomeren lassen sich aus dem 13-C NMR ersehen.

Das Polymer hat eine relative Viskosität von 2,95 (gemessen in m-Kresol). Die Differentialthermoanalyse zeigt einen Schmelzpunkt von 193 °C (Peak 2. Aufheizen), die Kristallisationsenthalpie beträgt beim Abkühlen von 150 °C 26,4 J/g.

Im Vergleich hierzu zeigt ein auf die gleiche Weise hergestelltes Copolyamid aus 80 % Caprolactam und 20 % Aminoundecansäure mit einer relativen Viskosität von 2,95(gemessen in m-Kresol) in der Differentialthermoanalyse einen Schmelzpunkt von 198°C, die Kristallisationsenthalpie beträgt beim Abkühlen von 150°C 29,6 J/g.

### Beispiel 3

Ein Terpolymer gemäß Beispiel 1 wurde auf einer konventionellen Monofilanlage zu Monofilen des Durchmessers 2,00 mm verarbeitet.

Die Monofilen hatten folgende Eigenschaften:

| | | |
|---|---|---|
| Linearfestigkeit | (cN/tex) | 48 |
| Höchstzugkraftdehnung | (%) | 26 |
| Knotenfestigkeit | (cN/tex) | 31 |
| Biegesteifigkeit | (N/mm²) | 60 |
| Kochschrumpf | (%) | 15 |

### Beispiel 4

Ein Terpolymer gemäß Beispiel 2 wurde auf einer konventionellen Monofilanlage zu Monofilen des Durchmessers 2,00 mm verarbeitet.

Die Monofilen hatten folgende Eigenschaften:

| | | |
|---|---|---|
| Linearfestigkeit | (cN/tex) | 47 |
| Höchstzugkraftdehnung | (%) | 30,5 |
| Knotenfestigkeit | (cN/tex) | 36 |
| Biegesteifigkeit | (N/mm²) | 38 |
| Kochschrumpf | (%) | 17 |

### Beispiel 5 (Vergleich)

Ein Copolymer in der Zusammensetzung 80 % Caprolactam und 20 % Aminoundecansäure mit einer relativen Viskosität von 2,95 (gemessen in m-Kresol) wurde auf einer konventionellen Monofilanlage zu Monofilen des Durchmessers 2,00 mm verarbeitet. Die Monofilen hatten folgende Eigenschaften:

| | | |
|---|---|---|
| Linearfestigkeit | (cN/tex) | 46 |
| Höchstzugkraftdehnung | (%) | 28 |
| Knotenfestigkeit | (cN/tex) | 27 |
| Biegesteifigkeit | (N/mm²) | 33 |
| Kochschrumpf | (%) | 14 |

### Beispiel 6 (Vergleich)

Ein handelsübliches Copolymer in der Zusammensetzung 80 % Caprolactam und 15 % AH-Salz (Ultramid C 35 der Fa. BASF) mit einer relativen Viskosität von 3,50 (gemessen in m-Kresol) wurde auf einer konventionellen Monofilanlage zu Monofilen des Durchmessers 2,00 mm verarbeitet.

Die Monofilen hatten folgende Eigenschaften:

| | | |
|---|---|---|
| Linearfestigkeit | (cN/tex) | 45 |
| Höchstzugkraftdehnung | (%) | 22 |
| Knotenfestigkeit | (cN/tex) | 23 |
| Biegesteifigkeit | (N/mm²) | 85 |
| Kochschrumpf | (%) | 16 |

## Patentansprüche

1. Ternäre Copolyamide aus
a) 75 - 85 Gew.-% Caprolactam
b) 4 - 20 Gew.-% Aminoundecansäure und/oder Aminododecansäure und
c) 4 - 20 Gew.-% Hexamethylendiaminadipat (AH-Salz).

2. Verwendung von Copolyamiden nach Anspruch 1 zur Herstellung von Formkörpern, Folien, Fasern, Monofilen.

3. Formkörper, Folien, Fasern und Monofile, hergestellt aus ternären Copolyamiden gemäß Anspruch 1.

## Claims

1. Ternary copolyamides prepared from
a) 75 to 85 wt.% caprolactam
b) 4 to 20 wt.% aminoundecanoic acid and/or aminododecanoic acid and
c) 4 to 20 wt.% hexamethylenediamine adipate (AH salt).

2. Use of copolyamides according to claim 1 for the production of moulded articles, films, fibres, monofilaments.

3. Moulded articles, films, fibres, monofilaments produced from ternary copolyamides according to claim 1.

## Revendications

1. Copolyamides ternaires de
a) 75 à 85 % en poids de caprolactame,
b) 4 à 20 % en poids d'acide aminoundécanoïque et/ou d'acide aminododécanoïque et
c) 4 à 20 % en poids d'adipate de l'hexaméthylènediamine (sel AH).

2. Utilisation des copolyamides selon la revendication 1 pour la fabrication d'objets moulés, de feuilles, de fibres, de monofilaments.

3. Objets moulés, feuilles, fibres et monofilaments fabriqués à partir des copolyamides ternaires de la revendication 1.
